# NEUE EUROPÄISCHE PATENTSCHRIFT

(11) **EP 1 092 407 B2**
(45) Veröffentlichungstag und Bekanntmachung des Hinweises auf die Entscheidung über den Einspruch: **13.06.2007**
(45) Hinweis auf die Patenterteilung: 12.05.2004
(21) Anmeldenummer: 00121712.4
(22) Anmeldetag: 04.10.2000
(51) Int. Cl.: A61G 5/04

(54) **Fahrzeug, insbesondere Rollstuhl**
Vehicle, such as a wheelchair
Véhicule, notamment fauteuil roulant

(30) Priorität: 13.10.1999 DE 19949405
(43) Veröffentlichungstag der Anmeldung: 18.04.2001
(73) Patentinhaber: Ulrich Alber GmbH, 72461 Albstadt-Tailfingen (DE)
(72) Erfinder: Birmanns, Thomas, 72336 Balingen (DE); Ulrich, Gerd, 72351 Geislingen (DE)
(74) Vertreter: Staudt, Hans-Peter

(56) Entgegenhaltungen:
- DE-A- 3 924 817
- DE-A- 4 127 257
- DE-A- 19 708 058
- GB-A- 2 285 022
- US-A- 3 812 928
- US-A- 5 161 630
- US-A- 5 472 059
- US-A- 5 624 004

## Beschreibung

Die Erfindung betrifft ein Fahrzeug, insbesondere einen Rollstuhl, mit einem Fahrzeuggestell,
mit mindestens einem Antriebsrad, das abnehmbar auf einer Achse gelagert ist,
wobei das Antriebsrad eine Radnabe und einen vollständig im Bereich der Radnabe angeordneten Elektromotor mit einem Stator und einem Rotor aufweist,
wobei der Stator fest mit einem stationären Teil rückseitigen der Radnabe und der Rotor mit einem Umfangsteil der Radnabe, welches sich beim Betrieb des Fahrzeugs dreht, verbunden ist,
mit einer Führungseinrichtung in Form einer Steckachse und einer Führungsbuchse, die es erlaubt, das Antriebsrad in axialer Richtung in seine Betriebsstellung bezüglich des Fahrzeuggestells zu bringen, und
mit einer eine Drehmomentaufnahmeeinrichtung und eine Drehmomentübertragungseinrichtung aufweisenden Drehmomentabstützung, die im betriebsbereiten Zustand des Fahrzeugs durch formschlüssigen Eingriff zwischen einem einzuführenden Element und einem das einzuführende Element aufnehmenden Element ein Drehen des Stators gegenüber dem Fahrzeuggestell verhindert,
wobei das einzuführende Element und das das einzuführende Element aufnehmende Element beim verschieben des Antriebsrades in axialer Richtung in seine Betriebsstellung bezüglich des Fahrzeuggestells in Eingriff gelangen,
mit mindestens einem Antriebsrad, das abnehmbar auf einer Achse gelagert ist,
wobei das Antriebsrad eine Radnabe und einen im Bereich der Radnabe angeordneten Elektromotor mit einem Stator und einem Rotor aufweist,
wobei der Stator fest mit einem stationären Teil der Radnabe und der Rotor mit einem Umfangsteil der Radnabe, welches sich beim Betrieb des Fahrzeugs dreht, verbunden ist,
mit einer Führungseinrichtung, die es erlaubt, das Antriebsrad in axialer Richtung in seine Betriebsstellung bezüglich des Fahrzeuggestells zu bringen, und
mit einer eine Drehmomentaufnahmeeinrichtung und eine Drehmomentübertragungseinrichtung aufweisenden Drehmomentabstützung, die im betriebsbereiten Zustand des Fahrzeugs durch formschlüssigen Eingriff zwischen einem einzuführenden Element und einem das einzuführende Element aufnehmenden Element ein Drehen des Stators gegenüber dem Fahrzeuggestell verhindert,
wobei das einzuführende Element und das das einzuführende Element aufnehmende Element beim Verschieben des Antriebsrades in axialer Richtung in seine Betriebsstellung bezüglich des Fahrzeuggestells in Eingriff gelangen. Die Erfindung betrifft sowohl Fahrzeuge mit einem Über- oder Untersetzungsgetriebe als auch solche ohne Getriebe.

Ein Fahrzeug der vorstehend genannten Art ist beispielsweise in der gattungsbildenden DE 41 27 257 A1 offenbart. Aus dieser Druckschrift ist ein Rollstuhl mit zwei Antriebsrädern bekannt, von denen jedes einen Elektromotor aufweist und die mittels einer Steckachse abnehmbar an dem Rollstuhlgestell befestigt werden können. An dem Rollstuhlgestell ist eine Befestigungsstelle für ein Stützteil ausgebildet, mit welchem der Stator des Elektromotors so abgestützt wird, dass er sich gegenüber dem Rollstuhlgestell nicht drehen kann. Beim Betrieb dieses Rollstuhls bewirkt die Drehung des Rotors des Elektromotors um den gegenüber dem Fahrstuhlgestell drehfest angeordneten Stator den Antrieb der Antriebsräder.

Bei diesem bekannten Rollstuhl ist in einem bestimmten Abstand von dem Zentrum des Antriebsrades ein Steckrohr ausgebildet, das beim Anbringen der Antriebsräder an dem Rollstuhlgestell in eine am Rollstuhlgestell befestigte Adapterhülse einsteckbar ist. Über dieses Steckrohr werden die stationären Teile der Antriebsvorrichtung, d.h. insbesondere der Stator des Elektromotors am Rollstuhlgestell abgestützt.

Diese bekannte Drehmomentabstützung weist den Nachteil auf, dass das Antriebsrad nur in einer bestimmten Winkellage zu dem Rollstuhlgestell an diesem befestigt werden kann. Dieses Befestigen ist relativ häufig durchzuführen, insbesondere dann, wenn die Räder zum Transport des Rollstuhls zuvor abgenommen wurden. Das Anbringen der Räder erfolgt oftmals durch behinderte oder alte Personen, beispielsweise den Rollstuhlfahrer selbst oder dessen Lebensgefährten. Die genaue Ausrichtung des Antriebsrads derart, dass das Steckrohr exakt in die Adapterhülse passt, ist daher oftmals mit erheblichen Schwierigkeiten verbunden.

Aus der US-A-5 161 630 ist ein motorisch betriebener Rollstuhl bekannt, bei dem jedem Antriebsrad ein Antriebsmotor zugeordnet ist, wobei diese Antriebsmotoren mittels Schraubverbindungen stationär mit dem Rollstuhlgestell verbunden sind.

Aus den Druckschriften DE 39 24 817 A1, US-A-5 624 004, US-A-5 472 059 und US-A-3 812 928 sind Fahrzeuge mit Nabenmotoren bekannt, bei denen zur Drehmomentabstützung Schraubverbindungen vorgesehen sind.

Der Erfindung liegt das technische Problem zugrunde, ein gattungsgemäßes Fahrzeug bereitzustellen, bei dem sich das Anbringen eines Antriebsrades an dem Fahrzeuggestell leicht gestaltet.

Diese Aufgabe wird bei einem gattungsgemäßen Fahrzeug gemäß dem Oberbegriff des Patentanspruchs 1 durch die kennzeichnenden Merkmale des Patentanspruchs 1 gelöst.

Erfindungsgemäß sind das einzuführende Element und/oder das aufnehmende Element in einer Anzahl größer als eins bereitgestellt, so dass ein Anbringen des Antriebsrades an dem Fahrgestell in unterschiedlichen Winkellagen möglich ist. Wenn beispielsweise für ein einzuführendes Element eine über den Umfang verteilte Vielzahl von aufnehmenden Elementen bereitgestellt ist, kann das Antriebsrad in einer Vielzahl von Winkellagen angebracht werden. Es versteht sich, dass die Wahrscheinlichkeit, dass eine zufällige Winkellage das vollständige Anbringen ermöglicht, mit der Anzahl der aufnehmenden Elemente steigt bzw. dass das Maß an Verdrehung, das ausgehend von einer beliebigen zufälligen Winkelstellung aus erforderlich ist, um ein Eingreifen des einzuführenden Elements in ein aufnehmendes Element zu ermöglichen, mit der Anzahl der aufnehmenden Elemente abnimmt.

Wenn durch die Bereitstellung von mehreren einzuführenden Elementen bzw. aufnehmenden Elementen, vorzugsweise einer unterschiedlichen Anzahl von einzuführenden Elementen und aufnehmenden Elementen, eine Vielzahl von Winkellagen des Antriebsrades zum Fahrzeuggestell, in denen das Antriebsrad an das Fahrzeuggestell befestigt werden kann, gegeben ist, kann das Antriebsrad in eine beliebige Stellung zum Fahrzeuggestell gebracht werden und muss lediglich geringfügig verdreht werden, um vollständig an dem Fahrzeuggestell angebracht werden zu können.

In einer vorteilhaften Ausführungsform sind das einzuführende Element bzw. die einzuführenden Elemente an dem Fahrgestell und das aufnehmende Element bzw. die aufnehmenden Elemente an dem Antriebsrad angeordnet. Vorzugsweise sind zudem mehrere einzuführende Elemente und mehrere aufnehmende Elemente bereitgestellt.

In einer bevorzugten Ausführungsform der Erfindung sind an der Radnabe des Antriebsrads eine Vielzahl aufnehmender Elemente in Form von radial verlaufenden Nuten ausgebildet, die als Drehmomentübertragungseinrichtung dienen, und an dem Fahrgestell sind drei einzuführende Elemente in Form von radial verlaufenden Stege ausgebildet, die in die radial verlaufenden Nuten einführbar sind und als Drehmomentaufnahmeeinrichtung dienen. Wenn die drei Stege im betriebsbereiten Zustand des Rollstuhls in entsprechende Nuten eingefügt sind, wird somit eine Drehmomentabstützung bereitgestellt. Je mehr Nuten in der Nabe ausgebildet sind, desto einfacher gestaltet sich das Anbringen des Antriebsrades an dem Rollstuhl.

Das Anbringen der Antriebsräder an dem Rollstuhl kann zudem durch eine entsprechende Formgebung der Nuten und der Stege erleichtert werden. Die Nuten sind vorzugsweise an ihrem oberen Rand abgerundet oder angeschrägt, so dass die Stege, welche ebenfalls vorzugsweise eine Abrundung und/ oder Anschrägung aufweisen, leicht einführbar sind. Bei einer solchen oder ähnlichen bevorzugten Ausgestaltung ergibt sich beim Anbringen des Antriebsrades durch Aufstecken in axialer Richtung ein selbsttätiges Verdrehen des Stators in eine Position, die ein Einführen der Stege in die Nuten ermöglicht.

Zur Vermeidung von möglicherweise störenden Geräuschen bei Lastwechseln sind neben einer entsprechenden Positionierung der Nuten und Stege geeignete Materialpaarungen auszuwählen. Das Material, in dem die Nuten ausgebildet sind, ist vorzugsweise ein Kunststoff entsprechender Festigkeit. Es versteht sich, dass zur Übertragung entsprechend hoher Drehmomente eine ausreichende Dimensionierung der Stege und Nuten erfolgen muss. Der gleichzeitige Eingriff mehrerer Stege ist empfehlenswert.

Die erfindungsgemäße Lösung eignet sich insbesondere für solche Rollstühle, bei denen jeweils eine komplette Antriebseinheit mit entsprechender Energieversorgung an oder in dem Antriebsrad untergebracht ist. Bei derartigen Rollstühlen bedarf es zwischen dem Fahrzeuggestell und dem Antriebsrad keiner Einrichtungen, die für eine Energieversorgung oder Signalführung sorgen. Die Drehmomentaufnahmeeinrichtung kann somit frei von derartigen Erwägungen ausgeführt werden.

Bei solchen Rollstühlen, bei denen eine Energieversorgung und/oder Signalübertragung zwischen Fahrgestell und Antriebsrad erforderlich ist, beispielsweise bei einem zentralen Schaltpaneel zur Steuerung zweier Antriebsräder bzw. bei einer am Fahrzeuggestell angeordneten Batterie, können am Antriebsrad konzentrische Kontaktringe vorgesehen sein, die mit entsprechend angeordneten Kontaktstiften am Fahrzeuggestell in Berührung gelangen, wenn die Antriebsräder betriebsbereit am Fahrzeuggestell montiert sind. Die Kontaktringe können sowohl der Übertragung des Antriebstroms als auch der Übertragung von Steuersignalen dienen. Zur Abdeckung derartiger Kontaktringe kann eine Abdeckscheibe vorgesehen sein.

Zur Vermeidung von Problemen, die mit der elektromagnetischen Verträglichkeit zusammenhängen, kann anstelle der Signalübertragung mittels Kontaktring und Kontaktstift eine Übertragung mittels einer Hochfrequenzeinrichtung vorgesehen sein, die berührungslos arbeiten kann.

Die Erfindung wird im folgenden anhand eines bevorzugten Ausführungsbeispiels weiter erläutert unter Bezug auf die beigefügte Zeichnung, in der
Fig. 1 eine perspektivische Teilansicht eines Antriebsrads mit radial verlaufenden Nuten und eines an einem Fahrgestell befestigbaren und zu den Nuten komplementär ausgebildete Stege aufweisenden Stützelements ist,
Fig. 2 eine vergrößerte Teilansicht der in Figur 1 gezeigten Nuten ist,
Fig. 3 eine vergrößerte Detailansicht der Stege des in Fig. 1 gezeigten Stützelements ist,
Fig. 4 eine perspektivische Darstellung eines Teils eines Antriebsrades ist, das auf der dem Fahrgestell zugewandten Seite Kontaktringe aufweist, und
Fig. 5 eine der Darstellung gemäß Fig. 4 entsprechende perspektivische Darstellung ist, die Kontaktstifte und eine Abdeckplatte zeigt.

Im folgenden werden zunächst Merkmale der bevorzugten Ausführungsform eines erfindungsgemäßen Fahrzeugs beschrieben, die in der Zeichnung nicht oder nicht näher dargestellt sind. Bei der bevorzugten Ausführungsform des erfindungsgemäßen Fahrzeugs handelt es sich um einen Krankenrollstuhl, der zwei Antriebsräder aufweist. Jedes Antriebsrad verfügt über eine separate Antriebseinheit, die vollständig im Bereich einer Radnabe 1 angeordnet ist. Diese Antriebseinheit weist insbesondere einen Elektromotor mit einem Stator und einem Rotor, eine elektronische Steuereinheit und eine Akkumulatoranordnung auf. Die Ansteuerung des Elektromotors erfolgt über konzentrisch zur Radnabe angeordnete Greifringe, über die der Rollstuhlfahrer eine manuelle Antriebskraft aufbringen kann. Diese manuelle Antriebskraft wird über Sensoren gemessen. In Abhängigkeit von entsprechenden Sensorsignalen wird der Elektromotor angesteuert und gibt ein bestimmtes Drehmoment ab, das entweder unterstützend in Antriebsrichtung wirkt oder bremsend entgegen der Antriebsrichtung.

Der Stator des Elektromotors ist fest mit einem stationären rückseitigen Teil 2 der Radnabe 1 verbunden. Der Rotor des Elektromotors ist mit einem Umfangsteil 3 der Radnabe 1 verbunden, welches sich beim Betrieb des Rollstuhls dreht.

An der Rückseite 2 der Radnabe 1 ist ein Kunststoffring 4 angebracht, in dem eine Vielzahl von sich in radialer Richtung erstreckenden Nuten 10 ausgebildet ist.

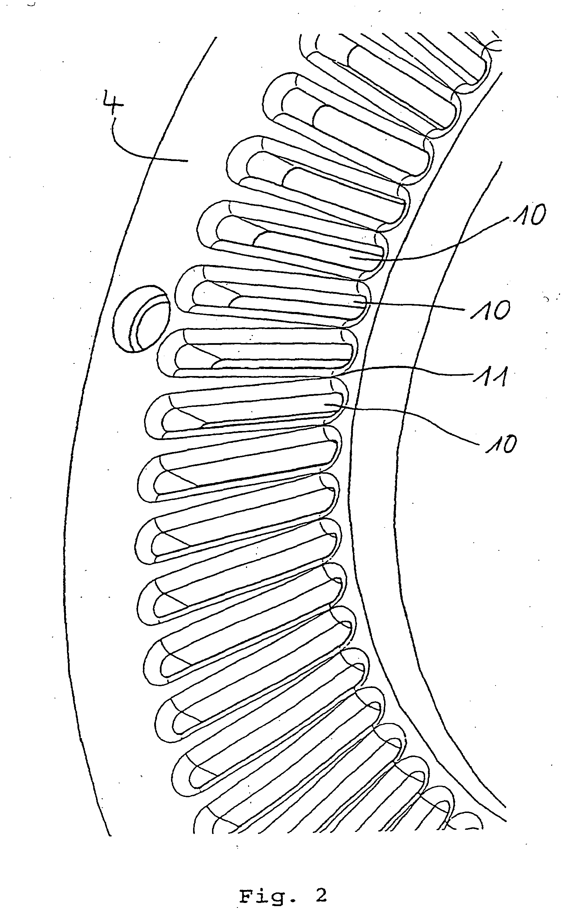

Wie aus Fig. 2 deutlicher ersichtlich, sind die Nuten 10 an ihrem oberen Rand, d.h. im Bereich der Öffnung, abgerundet. Die Abrundung ist so ausgeführt und die Nuten sind in ihrer Lage zueinander so angeordnet, dass an einer in Fig. 2 mit 11 bezeichneten Stelle, die sich zwischen zwei aneinandergrenzenden Nuten in der Nähe von deren radial nach innen gerichteten Enden befindet, die Radien der Abrundung zusammenlaufen.

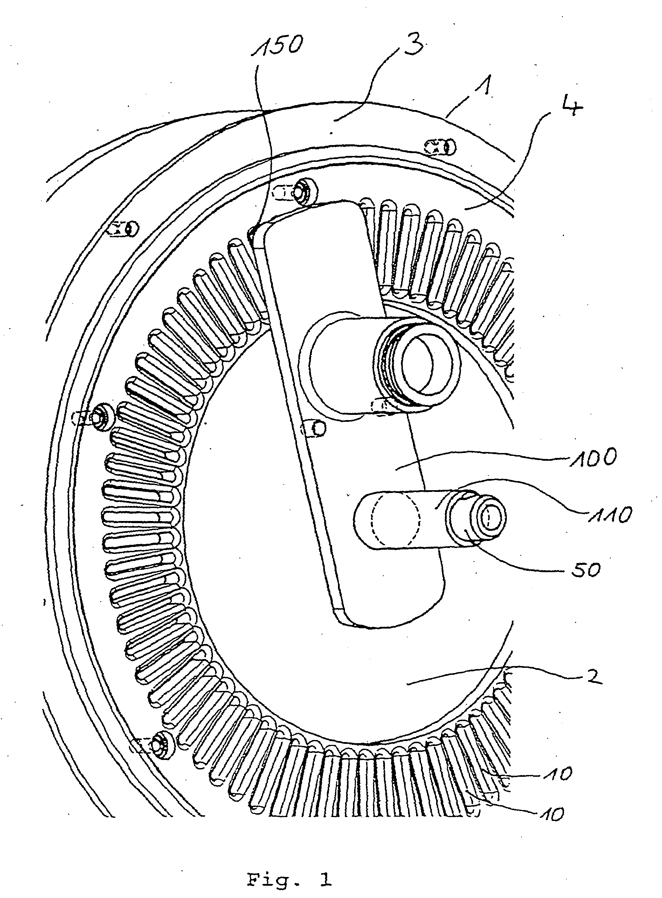

In Fig. 1 ist zudem eine Drehmomentstütze 100 dargestellt, die an dem Fahrzeuggestell, d.h. dem Rollstuhlgestell befestigbar ist. Die Drehmomentstütze 100 kann auch integral mit dem Rollstuhlgestell verbunden sein. Eine Steckachse 50 verläuft durch eine an der Drehmomentstütze 100 angebrachte Achsenhülse 110 sowie durch das Zentrum der Radnabe 1.

Auf der der Achsenhülse 110 gegenüberliegenden Seite der Drehmomentstütze 100 sind drei Stege 150 ausgebildet, die, wenn das Antriebsrad an dem Rollstuhlgestell betriebsbereit montiert ist, in drei nebeneinanderliegende Nuten 10 eingreifen. Es versteht sich, dass die Stege 150 so ausgebildet sind, dass sie leicht in die Nuten 10 einführbar sind und gleichzeitig eine möglichst spielfreie Drehmomentübertragung gewährleisten.

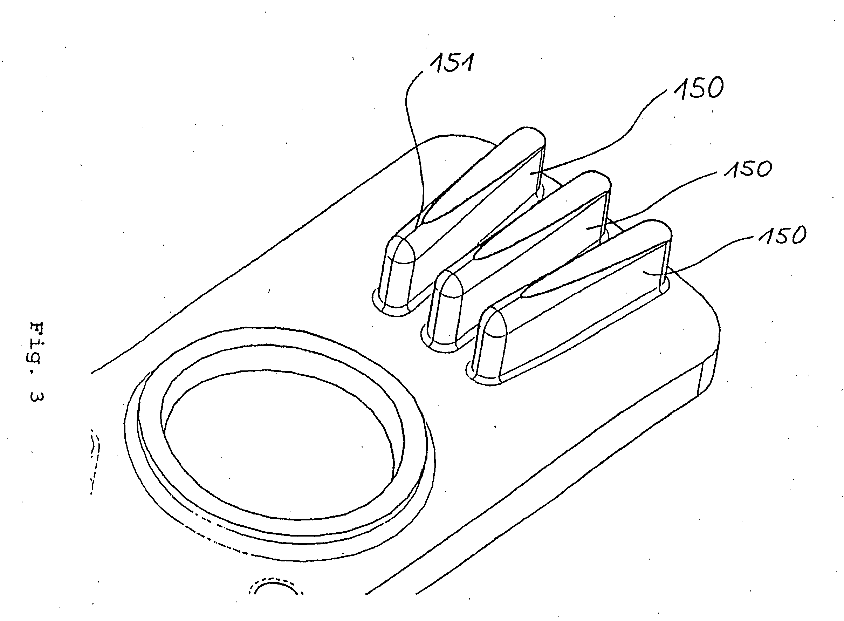

Eine bevorzugte Ausführungsform der Stege 150 ist in Fig. 3 dargestellt. Wie aus Fig. 3 ersichtlich, sind die Stege 150 auf ihrer Oberseite abgerundet, insbesondere an dem radial innen gelegenen Ende. Über einen Teil der Länge des Steges 150 ist zudem eine Abschrägung vorgesehen, die bewirkt, dass die Höhe der Stege am radial innen liegenden Ende größer ist als am radial aussen liegenden Ende.

Die in Fig. 3 gezeigte Ausgestaltung der Stege 150 ergibt mit der in Fig. 2 dargestellten Ausgestaltung der Nuten 10 ein besonders leichtes Einführen der Stege 150 in die Nuten 10. Der günstigste Fall der Montage ist selbstverständlich dann gegeben, wenn in der zufällig gewählten Winkellage des Antriebsrades zum Rollstuhlgestell jeder Steg 150 genau mit einer Nut 10 fluchtet. Der ungünstigste Fall ist dann gegeben, wenn die Mittellinie 151 eines Stegs 150 sich genau zwischen zwei Nuten 10 befindet. Bei der Ausgestaltung der Nuten gemäß Fig. 2 und der Stege gemäß Fig. 3 liegt in diesem ungünstigsten Fall die Mittellinie 151 am radial innen liegenden Ende der Stege 150 an der in Fig. 2 mit dem Bezugszeichen 11 bezeichneten Stelle auf, an der die Radien an der Öffnung der beiden nebeneinanderliegenden Nuten 10 zusammenlaufen. Da auch im Bereich der Mittellinie 151 am radial innnen liegenden Ende der Stege 150 die Abrundungsradien zusammenlaufen, bedarf es lediglich einer äußerst geringen Kraft in Umfangsrichtung, verbunden mit einer ebenfalls geringen Kraft in Axialrichtung, um ein leichtes Verdrehen des Antriebsrades um einen lediglich geringen Drehwinkel und ein weiteres Einschieben in Axialrichtung zu bewirken, damit die Stege 150 in entsprechende Nuten 10 eintreten, so dass das Antriebsrad in eine betriebsbereite Stellung gelangt, in der der stationäre Teil 2 der Radnabe 1 drehfest mit dem Rollstuhlgestell verbunden ist.

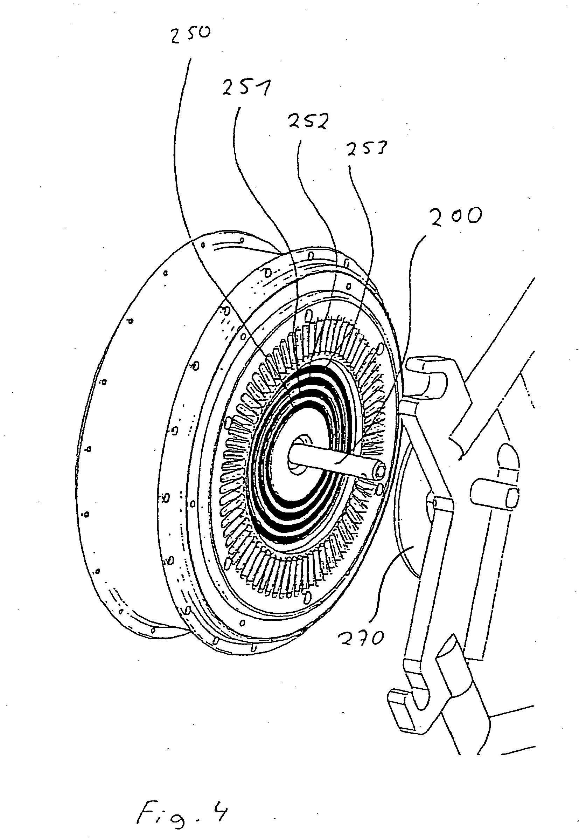

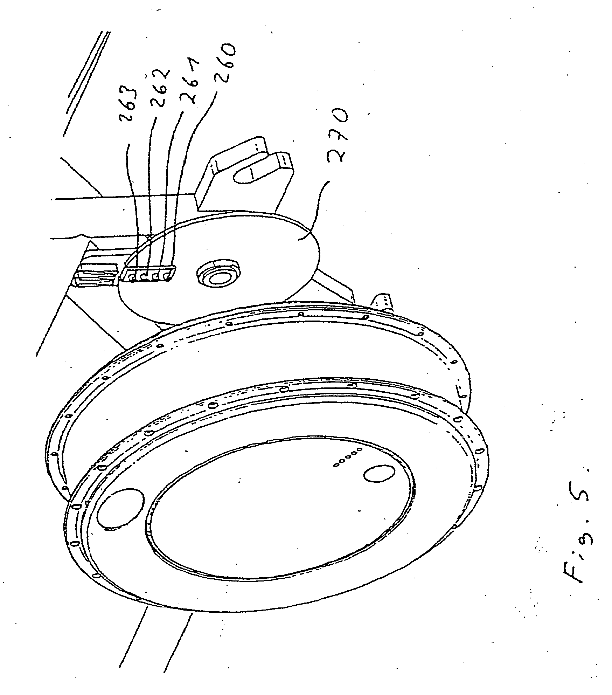

Fig. 4 zeigt eine Ausführungsform einer Radnabe mit einer Steckachse 200, wobei auf der dem Rollstuhlgestell zugewandten Seite der Radnabe vier konzentrische Kontaktringe 250, 251, 252 und 253 vorgesehen sind. Vier entsprechende Konstaktstifte 260, 261, 262 und 263 sowie eine Abdeckplatte 270 sind in Fig. 5 dargestellt. Die Abdeckplatte 270 dient der Abdeckung der Kontaktringe 250, 251, 252 und 253 im betriebsbereiten Zustand.

Wenn bei der zuvor beschriebenen Ausführungsform das Antriebsrad an dem Fahrgestell befestigt werden soll, wird das Antriebsrad, vorzugsweise im Umfangsbereich der Radnabe, gehalten und in beliebiger Winkellage angesetzt. Hierbei greift die Steckachse 200 in eine entsprechende Führungsbuchse am Rollstuhlgestell ein. Sofern nicht zufällig eine Winkellage gegeben ist, bei der die Stege 150 mit entsprechenden Nuten 10 fluchten, so dass ein direktes vollständiges axiales Einschieben in axialer Richtung möglich ist, nimmt der innerhalb des von Hand gehaltenen Rotors frei drehbare Stator aufgrund der speziellen Ausgestaltung der Stege und Nuten selbsttätig die zum vollständigen Einführen erforderliche Winkellage ein. Mit anderen Worten, das zum vollständigen Einführen erforderliche geringfügige Verdrehen des Stators muß nicht durch ein Drehen der Radnabe von Hand bewirkt werden, sondern wird beim axialen Aufsetzen und Einschieben durch die spezielle Form der Nuten und Stege bewirkt.

## Patentansprüche

1. Fahrzeug, insbesondere Rollstuhl,
mit einem Fahrzeuggestell,
mit mindestens einem Antriebsrad, das abnehmbar auf einer Achse (50, 200) gelagert ist,
wobei das Antriebsrad eine Radnabe (1) und einen vollständig im Bereich der Radnabe (1) angeordneten Elektromotor mit einem Stator und einem Rotor aufweist,
wobei der Stator fest mit einem stationären rückseitigen Teil (2) der Radnabe (1) und der Rotor mit einem Umfangsteil (3) der Radnabe (1), welches sich beim Betrieb des Fahrzeugs dreht, verbunden ist,
mit einer Führungseinrichtung in Form einer Steckachse (50, 200) und einer Führungsbuchse (110), die es erlaubt, das Antriebsrad in axialer Richtung in seine Betriebsstellung bezüglich des Fahrzeuggestells zu bringen, und
mit einer eine Drehmomentaufnahmeeinrichtung (150) und eine Drehmomentübertragungseinrichtung (10) aufweisenden Drehmomentabstützung, die im betriebsbereiten Zustand des Fahrzeugs durch formschlüssigen Eingriff zwischen einem einzuführenden Element (150) und einem das einzuführende Element aufnehmenden Element (10) ein Drehen des Stators gegenüber dem Fahrzeuggestell verhindert,
wobei das einzuführende Element (150) und das das einzuführende Element aufnehmende Element (10) beim Verschieben des Antriebsrades in axialer Richtung in seine Betriebsstellung bezüglich des Fahrzeuggestells in Eingriff gelangen,
**dadurch gekennzeichnet,**
**dass** das einzuführende Element (150) und/oder das aufnehmende Element (10) in einer Anzahl größer als eins bereitgestellt sind, so dass ein Anbringen des Antriebsrades an dem Fahrzeuggestell in unterschiedlichen Winkellagen möglich ist.

2. Fahrzeug nach Anspruch 1, **dadurch gekennzeichnet, dass** mindestens ein einzuführendes Element (150) an dem Fahrgestell und dass mindestens ein aufnehmendes Element (10) an dem Antriebsrad angeordnet ist.

3. Fahrzeug nach Anspruch 1 oder 2, **dadurch gekennzeichnet, dass** mehrere einzuführende Elemente (150) und mehrere aufnehmende Elemente (10) bereitgestellt sind.

4. Fahrzeug nach Anspruch 1, 2 oder 3, **dadurch gekennzeichnet, dass** das einzuführende Element (150) ein sich radial erstreckender Steg (150) und das aufnehmende Element (10) eine sich radial erstreckende Nut (10) ist.

5. Fahrzeug nach Anspruch 4, **dadurch gekennzeichnet, dass** der Steg (150) an seiner Oberseite zumindest über einen Teil seiner Länge abgerundet ist.

6. Fahrzeug nach Anspruch 4 oder 5, **dadurch gekennzeichnet, dass** der Steg (150) an seiner Oberseite zumindest über einen Teil seiner Länge in radialer Richtung abgeschrägt ist.

7. Fahrzeug nach Anspruch 4, 5 oder 6, **dadurch gekennzeichnet, dass** die Nut (10) an ihrer Oberseite abgerundet ist.

8. Fahrzeug nach Anspruch 7, **dadurch gekennzeichnet, dass** die Radien der abgerundeten Randbereiche zweier nebeneinanderliegender Nuten (10) im Bereich des radial innen liegenden Endes (11) der Nuten (10) zusammenlaufen.

9. Fahrzeug nach einem der vorstehenden Ansprüche, **dadurch gekennzeichnet, dass** das einzuführende Element (150) und das aufnehmende Element (10) in unterschiedlicher Anzahl bereitgestellt sind.

10. Fahrzeug nach Anspruch 9, **dadurch gekennzeichnet, dass** die Anzahl der einzuführenden Elemente (150) kleiner ist als die Anzahl der aufnehmenden Elemente (10).

11. Fahrzeug nach Anspruch 10, **dadurch gekennzeichnet, dass** die Anzahl der einzuführenden Elemente (150) drei beträgt.

12. Fahrzeug nach einem der vorstehenden Ansprüche, **dadurch gekennzeichnet, dass** das aufnehmende Element in einem Kunststoffmaterial ausgebildet ist.

## Claims

1. Vehicle, particularly a wheelchair having
a vehicle frame,
at least one driving wheel detachably supported on an axle (50, 200), wherein said driving wheel has a wheel hub (1) and an electric motor completely positioned in a region of said wheel hub (1), said electric motor having a stator and a rotor,
wherein said stator is fixedly secured to a stationary back portion (2) of said wheel hub (1) and said rotor is fixedly secured to a peripheral portion (3) of said wheel hub (1) which peripheral portion (3) rotates during operation of said wheelchair,
a guiding device in the form of a plug-in axle (50, 200) and a guiding sleeve (110) allowing to bring said driving wheel in an axial direction in its operating position with respect to said vehicle frame, and
a torque support having a torque receiving device (150) and a torque transmission device (10) which in an operative state of said vehicle prevents rotation of said stator with respect to said vehicle frame by positive locking engagement between an element to be inserted (150) and a receiving element (10) receiving said element to be inserted,
wherein said element to be inserted (150) and said receiving element (10) receiving said element to be inserted become engaged upon shifting said driving wheel in an axial direction in its operating position with respect to said vehicle frame
**characterized in that**
said element to be inserted (150) and/or said receiving element (10) are provided in a number larger than one so that mounting of the driving wheel to the vehicle frame is possible in different angular positions.

2. Vehicle according to claim 1, **characterized in that** there is provided at least one element to be inserted (150) at the vehicle frame and at least one receiving element (10) at the driving wheel.

3. Vehicle according to claim 1 or 2, **characterized in that** there are provided a plurality of elements to be inserted (150) and a plurality of receiving elements (10).

4. Vehicle according to claim 1, 2 or 3, **characterized in that** said element to be inserted (150) is a radially extending web (150) and said receiving element (10) is a radially extending groove (10).

5. Vehicle according to claim 4, **characterized in that** said web (150) is rounded off at its upper side over at least a part of its length.

6. Vehicle according to claim 4 or 5, **characterized in that** said web (150) is bevelled at its upper side in the radial direction over at least a part of its length.

7. Vehicle according to claim 4, 5 or 6, **characterized in that** said groove (10) is rounded off at its upper side.

8. Vehicle according to claim 7, **characterized in that** the edge rounding radii of two adjacent grooves (10) converge in a region adjacent to the radially inward end (11) of said grooves (10).

9. Vehicle according to one of the preceding claims, **characterized in that** the number of said elements to be inserted (150) and the number of said receiving elements (10) is different.

10. Vehicle according to claim 9, **characterized in that** the number of said elements to be inserted (150) is smaller than the number of said receiving elements (10).

11. Vehicle according to claim 10, **characterized in that** the number of said elements to be inserted (150) is three.

12. Vehicle according to one of the preceding claims, **characterized in that** said receiving element is made of plastic.

## Revendications

1. Véhicule, notamment fauteuil roulant, avec un châssis,
avec au moins une roue motrice, montée de façon amovible sur un axe (50, 200), la roue motrice présentant un moyeu de roue (1) et un moteur électrique complètement disposé dans la région du moyeu de roue (1), le moteur électrique ayant un stator et un rotor,
le stator étant fixement relié avec une partie arrière stationnaire (2) du moyeu de roue (1) et le rotor étant fixement relié avec une partie périphérique (3) du moyeu de roue (1) qui se tourne au cours du service du véhicule,
avec un dispositif de guidage en forme d'un axe à emboîtement (50, 200) et d'une douille de guidage (110) qui permet de porter la roue motrice dans sa position de service en direction axiale par rapport au châssis, et
avec un dispositif de réception (150) du couple moteur et un appui pour le couple moteur présentant un dispositif de transmission (10) du couple moteur, qui, dans l'état de service du véhicule, empêche un tournement du stator par rapport au châssis par fermeture géométrique entre un élément male (150) et un élément femelle (10) recevant l'élément male, l'élément male (150) et l'élément femelle (10) recevant l'élément male atteignant l'engrenage au moment du déplacement de la roue motrice en direction axiale dans sa position de service par rapport au châssis,
**caractérisé en ce que**
l'élément male (150) et/ou l'élément femelle (10) sont prévus dans un nombre supérieur à un de sorte que la fixation de la roue motrice sur le châssis est possible dans différentes positions angulaires..

2. Véhicule selon la revendication 1, **caractérisé en ce qu'**au moins un élément male (150) est fixé sur le châssis et qu'au moins un élément femelle (10) est fixé sur la roue motrice.

3. Véhicule selon la revendication 1 ou 2, **caractérisé en ce que** plusieurs éléments males (150) et plusieurs éléments femelles (10) sont prévus..

4. Véhicule selon la revendication 1, 2 ou 3, **caractérisé en ce que** l'élément male (150) est une barrette (150) s'étendant radialement et que l'élément femelle (10) est une rainure (10) s'étendant radialement.

5. Véhicule selon la revendication 4, **caractérisé en ce que** la barrette (150) est arrondie sur sa surface supérieure le long au moins une partie de sa longueur.

6. Véhicule selon la revendication 4 ou 5, **caractérisé en ce que** la barrette (150) est biaisée sur sa surface supérieure le long au moins une partie de sa longueur.

7. Véhicule selon la revendication 4, 5 ou 6, **caractérisé en ce que** la rainure (10) est arrondie sur sa surface supérieure.

8. Véhicule selon la revendication 7, **caractérisé en ce que** les rayons des régions périphériques de deux rainures (10) adjacentes convergent dans la région de l'extrémité située radialement à l'intérieur (11) des rainures (10).

9. Véhicule selon une des revendications précédentes, **caractérisé en ce que** l'élément male (150) et l'élément femelle (10) sont prévus en nombres différents.

10. Véhicule selon la revendication 9, **caractérisé en ce que** le nombre des éléments males (150) est inférieur au nombre des éléments femelles (10).

11. Véhicule selon la revendication 10, **caractérisé en ce que** le nombre des éléments males (150) est trois.

12. Véhicule selon une des revendications précédentes, **caractérisé en ce que** l'élément femelle est agencé dans un matériel synthétique.
